# EUROPEAN PATENT SPECIFICATION

(11) **EP 3 659 432 B1**
(45) Date of publication and mention of the grant of the patent: **22.12.2021**
(21) Application number: 19211457.7
(22) Date of filing: 26.11.2019
(51) Int. Cl.: A01J 27/00, A01J 25/16, B65G 1/04

(54) **A WAREHOUSE FOR SEASONING HARD CHEESE**
EIN LAGER ZUM WÜRZE VON HARTKÄSE
UN ENTREPÔT POUR ASSAISONNER LE FROMAGE DUR

(30) Priority: 28.11.2018 IT 201800010668
(43) Date of publication of application: 03.06.2020
(73) Proprietor: Cantarelli S.p.A., 43123 Parma (IT)
(72) Inventor: CANTARELLI, Roberto, 43123 Parma (IT)
(74) Representative: Antonucci, Emanuele

(56) References cited:
- EP-A1- 0 316 281
- EP-A1- 3 387 899
- DE-C- 823 820
- FR-A1- 3 039 693

## Description

The present invention relates to the field of seasoning hard cheese wheels, such as for example Parmigiano Reggiano or Grana Padano cheese, which are distinguished by the weight of the individual wheels exceeding 30 kg. In particular, the present invention relates to a warehouse for seasoning hard cheese wheels and a relative management process.

The traditional warehouses for seasoning hard cheese wheels comprise a plurality of structures, called racks, organised in parallel rows and equipped with a plurality of shelves, preferably in wood, duly spaced apart to allow an adequate ventilation of the cheese wheels disposed therein.

To place and remove the cheese wheels on these racks, special machines called cheese wheel gripping machines are used, which are movable between the racks and configured to move yielding cheese wheels of considerable weight (usually 40 kg) without compromising the integrity thereof.

These machines are controlled by an operator and manual loading and unloading of the cheese wheels which, following their arrival at the warehouse, are normally moved by forklifts and temporarily stored in the aisles between the racks while awaiting positioning in the racks.

The warehouses of this type are able to ensure a natural seasoning of the cheese wheels which determines an excellent degree of quality. However, these warehouses have considerable disadvantages.

They require a considerable amount of labour responsible for implementing and/or supervising the different steps of the movement and control of the cheese wheels.

This aspect causes high production costs and operations limited by work hours.

Furthermore, the manual handling of cheese wheels can lead to the physical wear of the employees related to the considerable weights to move and determines a risk of accidents.

Furthermore, the cheese wheels left in the aisles risk being ruined if this positioning is maintained for too long, with a consequent reduction in value, and hinder the normal operation of the warehouse.

In addition, this type of warehouse has considerable difficulty coordinating the various activities connected to seasoning the cheese wheels, such as assessment, cleaning of the wheels and the shelves, overturning and moving the cheese wheels in different locations.

This difficulty in coordination can lead to inefficient management and errors that can affect the quality of the cheese wheels.

From document EP 0 316 281 a movable machine on wheels to clean the cheese wheels by means of brushes is known.

In this context, the technical task underpinning the present invention is to propose a warehouse for seasoning hard cheese wheels and a relative management process which overcome the problems of the prior art cited above.

In particular, an object of the present invention is to provide a warehouse for seasoning hard cheese wheels and a relative management process that allow a more efficient management compared to the existing warehouses, without altering the seasoning conditions that distinguish seasoning in traditional racks.

Another object of the present invention is to provide a warehouse for seasoning hard cheese wheels and a relative management process that allow automating at least some, preferably all, of the movement steps of the cheese wheels, at the same time allowing an optional manual execution of these steps.

Another object of the present invention is to propose a warehouse for seasoning hard cheese wheels and a relative management process capable of keeping track of the individual wheels in input and automatically and individually supervising the seasoning process.

Another object of the present invention is to provide a warehouse for seasoning hard cheese wheels and a relative management process in a traditional warehouse through modifications and interventions of the non-structural type.

The set technical task and specified aims are substantially attained by a warehouse for seasoning hard cheese wheels and a relative management process comprising the technical characteristics set out in one or more of the appended claims.

Further characteristics and advantages of the present invention will more fully emerge from the non-limiting description of a preferred but not exclusive embodiment of a warehouse for seasoning hard cheese wheels and a relative management process, as illustrated in the accompanying drawings, in which:

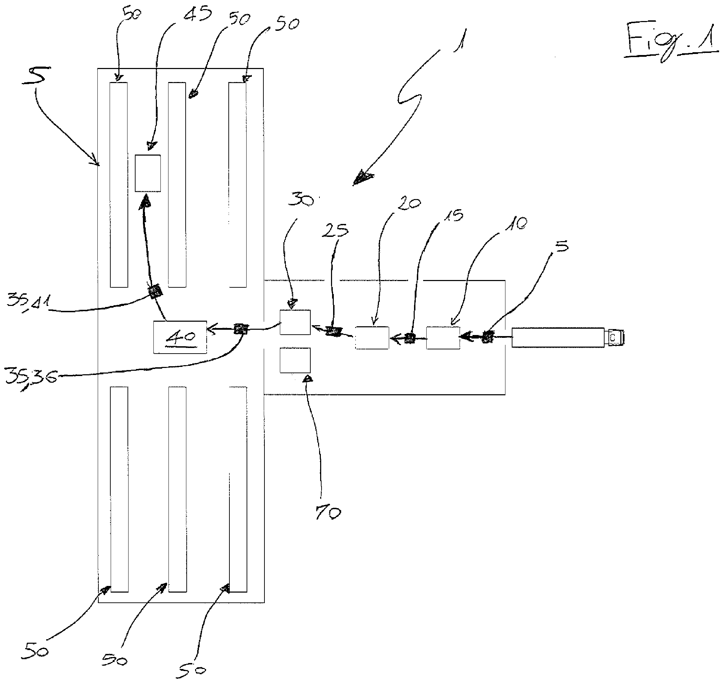

- figure 1 shows a diagram view of a warehouse for seasoning hard cheese wheels realised in accordance with the present invention.

A warehouse for seasoning hard cheese wheels and object of the present invention is indicated generally by the reference number 1 in the accompanying figures and will be hereinafter referenced with the shorthand notation "warehouse 1".

A further object of the present invention is a management process of a warehouse equipped with racks for seasoning hard cheese wheels, in which this warehouse is preferably realised in accordance with that which is described below.

In the context of the present description, the notation "cheese wheel" will be used to indicate a hard cheese wheel weighing indicatively between 30 kg and 45 kg.

This wheel is substantially cylindrical in shape and has one lateral, slightly convex surface and two faces or bases that are substantially flat.

These cheese wheels are for example constituted by an entire mould of Parmigiano Reggiano or Grana Padano cheese.

The warehouse 1 comprises a receiving station 10 configured to allow a temporary storage of cheese wheels entering the warehouse 1. Preferably the receiving station 10 comprises a first shelving adapt to support a plurality of cheese wheels of the type described above, preferably of the automated type with shuttles.

Preferably, the warehouse 1 further comprises collection means 5 configured to automatically collect the cheese wheels from the trailer of a road vehicle and place them in an orderly fashion in the receiving station 10, in particular in the first shelving.

These collection means can comprise self-guided vehicles (AGV), forklifts or shuttles that can be shared with the first shelving.

The process and object of the present invention comprises a step of arranging a plurality of hard cheese wheels.

These cheese wheels can be either in a semi-finished product state, i.e. cheese wheels which have just been formed (and salted) and cannot be sold without a minimum seasoning period, or in the finished product state in which they have already been seasoned and can be sold, and for which it is intended to continue the seasoning to further improve their organoleptic characteristics.

The step of arranging the cheese wheels comprises moving them, preferably automatically, from a road vehicle to the receiving station 10 and temporarily storing them in the receiving station 10 while waiting for the execution of the following steps, so as to free the vehicle from the cheese wheels themselves and allow it to depart without clogging operating portions of the warehouse 1, blocking the functionality thereof.

The warehouse 1 comprises a marking station 20 comprising a marking device configured to impress a long-lasting, unique and machine-readable mark on respective hard cheese wheels.

Preferably the marking station 20 further comprises removal means configured to remove a protective film that surrounds these cheese wheels before they reach the marking device.

Furthermore, the marking station 20 preferably comprises means for checking the quality of the mark configured to read the mark that has just been applied to verify the correctness and/or readability thereof. Preferably, the warehouse 1 comprises first transfer means 15 configured to automatically transfer the cheese wheels from the receiving station 10 to the marking station 20.

The first transfer means 15 can comprise AGV and/or shuttle and/or automatic conveyor belts able to automatically interface with both the receiving station 10 and the marking station 20 for the collection and delivery of the cheese wheels.

Preferably, the process comprises a step of automatically transferring the plurality of cheese wheels from the receiving station 10 to the marking station 20, in particular through the first transfer means 15.

The process preferably comprises a step of removing the protective film that surrounds each wheel and/or pallet to protect it during transport, preferably executed at the marking station 20.

Subsequently, the process comprises a step of impressing a long-lasting, unique and machine-readable mark on each cheese wheel.

For the purposes of this description, long-lasting mark is intended as a mark which is not in danger of being distorted and/or damaged and/or even partially removed during the successive steps of movement, storage and seasoning of the cheese wheels.

A machine-readable mark is intended as a mark comprising characters recognisable by a machine and arranged in a specific and precise position on the cheese wheel so as to be automatically accessible when the wheel is resting on any one of its two flat faces.

Unique mark is intended as a unique mark for each wheel, i.e. capable of allowing each cheese wheel to be distinguished from the other wheels in the warehouse.

Preferably, the step of impressing the mark on the cheese wheel comprises a step of applying a marking code on a predefined surface area of the cheese wheel.

In addition, preferably, a layer of transparent material is applied on the predefined surface area after having applied the marking code.

For example, the marking code is an alphanumeric code, or a bar code or a Data Matrix.

For example, the transparent material applied on the predefined surface area is suitable for food grade, i.e. suitable for contact with foods.

The use of an edible transparent material is also envisaged.

In accordance with one embodiment, the layer of transparent material is deposited on the predefined surface area in the form of a film or sheet.

In accordance with another embodiment, the transparent material is sprayed on the predefined surface area in such a way as to form the layer. For example, the transparent material consists of a mix based on vinyl acetate.

Alternatively, use of a mix based on vegetable compounds, such as for example corn-starch or carboxymethyl-cellulose (indicated with code E466). A variant embodiment includes the use of a transparent material comprising a mix of casein.

The predefined surface area of the cheese wheel can be on one of the flat sides or on the lateral surface.

It is also possible to apply the marking code in two predefined surface areas, for example one on the lateral surface and one on a flat side. The purpose of the double marking is the redundancy of the information.

In a first embodiment of the marking step, before applying the marking code, the crust is scraped from the predefined surface area, i.e. the crust is at least partially removed from this predefined surface area.

After this scraping, the predefined surface area is ready for the application of the marking code, which is preferably applied by means of ink-jet printing suitable for use with food products, i.e. suitable for contact with food.

Also included is the use of an edible ink formed by edible components. The scraping of the crust in the predefined surface area consists for example of a light milling that enables the ink to effectively grip on the cheese wheel. Furthermore, the scraping also has a "whitening" effect, which improves contrast so that the code can be more easily read.

The choice of ink colour is also dictated by the need to achieve a good contrast with respect to the colour of the cheese wheel so as to facilitate the subsequent automatic reading, for example by means of a camera.

The ink is applied in quantities that do not place food safety at risk.

In this first embodiment, the layer of transparent material is applied directly on the inkjet-printed code. In this way, the code is protected and at the same time easily readable (the layer is in fact transparent).

Preferably, the layer of transparent material is sprayed on the marking code. Any work operations on the cheese wheel, such as cleaning or brushing, affect neither the transparent layer nor the code, the legibility of which remains intact.

In a second embodiment of the marking process, applied to the cheese wheel, the application of the marking code is attained by applying a casein label bearing the marking code on the predefined surface area. In particular, the casein label is glued on the surface area by means of an adhesive. The casein label can be applied directly on the crust present in the predefined surface area. Alternatively, before applying the casein label the crust is scraped free from the predefined surface area, i.e. to at least partially remove the crust from the predefined surface area.

In this second embodiment, the layer of transparent material is applied on the casein label bearing the code.

For example, the application can be done by spraying or other methods, for example using a brush or pad.

In this case too, the layer of transparent material protects the label and the marking code from cleaning and/or brushing cycles.

Preferably the step of automatically transferring the plurality of cheese wheels from the receiving station 10 to the marking station 20 is carried out so as to ensure a substantially constant inflow of cheese wheels to the marking station 20 in accordance with the operational capacity of the marking station 20, so as to prevent accumulations of cheese wheels in the marking station 20.

Preferably, the process comprises a subsequent step of mark quality control where a machine checks the reading correctness and effectiveness of the marking code applied.

The warehouse 1 also comprises an accumulation station 30 or buffer for the cheese wheels configured to allow a temporary storage of cheese wheels before their seasoning, in order to free the marking station 20 of already-processed cheese wheels and not hinder the remaining parts of the warehouse 1 with the cheese wheels waiting for subsequent movements. In other words, this accumulation station 30 acts as a "buffer" for the subsequent machinery described below.

The accumulation station 30 comprises a fixed structure with housing stations for the cheese wheels. Preferably the accumulation station 30 comprises a second shelving adapted to support a plurality of cheese wheels, preferably of the automated type with shuttles.

In an alternative embodiment, the accumulation station 30 comprises at least one conveyor belt on which the cheese wheels are temporarily stored. The warehouse 1 also comprises second transfer means 25 configured to automatically transfer the cheese wheels from the marking station 20 to the accumulation station 30.

The second transfer means 25 can comprise AGV and/or shuttle and/or automatic conveyor belts able to automatically interface with both the marking station 20 and the accumulation station 30 for the withdrawal and delivery of the already-marked cheese wheels.

In one embodiment, the marking station 20 is configured to position the outgoing already-marked cheese wheels on suitable pallets and the accumulation station 30 is configured to allow the positioning of cheese wheels arranged on pallets. In this embodiment the second transfer means 25 comprise forklifts AGV configured to collect these pallets and deposit them in the accumulation station 30.

Alternatively, the second transfer means 25 can comprise a conveyor belt on which the marking station 20 automatically deposits the already-marked cheese wheels. In this embodiment the accumulation station 30 is suitable to automatically receive individual cheese wheels coming from the conveyor belt.

Preferably, the process described comprises a step of automatically transferring the plurality of cheese wheels from the marking station 20 to the accumulation station 30, in particular through the second transfer means 25.

Preferably the step of automatically transferring the plurality of cheese wheels from the marking station 20 to the accumulation station 30 is carried out so as to ensure the substantially immediate movement of the cheese wheels already processed by the marking station 20, so as to prevent accumulations of cheese wheels in the marking station 20 itself. Moreover, the process comprises a subsequent step of temporarily storing the cheese wheels in the accumulation station 30.

The warehouse 1 also comprises a plurality of racks 50 of the fixed type. The term rack is intended as a vertical structure comprising respective seasoning shelves, preferably in wood, adequately spaced, and suitable to the support and to the seasoning of the cheese wheels described above. Preferably, these racks 50 are arranged in a seasoning room "S" in parallel rows having a reciprocal distance comprised between 120 and 180 cm, even more preferably between 140 cm and 160 cm, so as to ensure a correct, natural-type ventilation to each cheese wheel and ensure the correct air/cheese ratio in the seasoning room "S".

Moreover, the receiving station 10 and accumulation station 30 are preferably arranged externally to the seasoning room "S", preferably on an area in front of it.

The warehouse 1 also comprises a cheese wheel gripping machine 45 movable between the racks 50, i.e. along the aisles defined between subsequent racks 50, and configured to automatically position one or more cheese wheels on the seasoning shelves.

In other embodiments in accordance with the present invention the warehouse 1 can be provided with two or more cheese wheel gripping machines 45 similar to that described, each configured to preside over a respective area of the seasoning room "S".

More in particular, the cheese wheel gripping machine 45 is configured to receive or to collect one or more cheese wheels of the type described above and move them vertically and/or horizontally in order to position them on (and collect them from) several seasoning shelves at different heights without ruining the outer surface thereof.

Preferably, the cheese wheel gripping machine 45 is configured to automatically read the mark of each cheese wheel. Alternatively, the reading of the mark of each cheese wheel can be carried out in different locations inside the warehouse 1.

The warehouse 1 further comprises movement means 35 configured to automatically move one or more cheese wheels between the accumulation station 30 and the cheese wheel gripping machine 45.

In one or more of the operating conditions of the warehouse 1, the movement means 35 are configured to automatically move one or more cheese wheels between the marking station 20 and the cheese wheel gripping machine 45. In other words, in these operating conditions of the warehouse 1, it is possible to directly transfer some of the cheese wheels from the marking station 20 to the cheese wheel gripping machine 45. These operating conditions are preferably implemented when the warehouse 1 is manned by human personnel (for example, but not necessarily, day workers).

Preferably, the movement means 35 are configured to automatically withdraw the cheese wheels from the accumulation station 30 and the cheese wheel gripping machine 45 is configured to automatically collect the cheese wheels from the same movement means 35.

The movement means 35 can comprise one or more self-guided vehicles (AGV). Alternatively one or more conveyor belts arranged between the accumulation station 30 or the marking station 20 and one or more aisles between the individual racks 50.

In the case of self-guided vehicles, they are preferably configured to automatically move individual pallets supporting a plurality of cheese wheels between the accumulation station 30 or the marking station 20 and the cheese wheel gripping machine 45.

Preferably, the warehouse 1 comprises an accumulation platform for the cheese wheels that is configured to receive a plurality of cheese wheels from the movement means 35 and proceed to the positioning of the individual cheese wheels in a second moment, freeing the movement means during this step.

In accordance with an aspect of the invention, the cheese wheel gripping machine 45 moves the cheese wheels from the movement means 35 to the accumulation platform.

Preferably, the accumulation platform is part of the cheese wheel gripping machine 45.

Preferably, in the embodiment in which the movement means 35 move the pallets supporting the cheese wheels, the cheese wheel gripping machine 45 comprises, i.e. integrates, a palletiser configured to automatically collect the pallets from the movement means 35 to arrange them on the accumulation platform.

Alternatively, the movement means 35 comprise a palletiser that automatically collects the pallets and/or the individual cheese wheels and delivers them to the accumulation platform and/or to the cheese wheel gripping machine 45. In this case, the cheese wheel gripping machine 45 used can be of the traditional type.

For example, the palletiser is located at the edge of one of the self-guided vehicles.

Preferably, the warehouse 1 comprises an exchange station 40 disposed between the accumulation station 30 and the cheese wheel gripping machine 45.

Preferably, the movement means 35 comprise at least a first self-guided vehicle 36 configured to collect one or more cheese wheels from the accumulation station 30 and at least a second self-guided vehicle 41 configured to deliver the cheese wheels to the cheese wheel gripping machine 45.

The first and second self-guided vehicles 36 and 41 are configured to exchange the cheese wheels at the exchange station 40. In particular, the first self-guided vehicles 36 are configured to transfer the cheese wheels in the movement step to the second self-guided vehicles 41.

The process described herein comprises a step of moving, preferably automatically, the cheese wheels from the accumulation station 30 up to the cheese wheel gripping machine 45, preferably by means of the movement means 35 described above.

Preferably, this step of moving the cheese wheels comprises automatically transferring one or more cheese wheels from the accumulation station 30 or from the marking station 20 by means of movement means 35, for example by means of a first self-guided vehicle 36 configured to automatically interface with the accumulation station 30 and move these cheese wheels up to the exchange station 40.

At the exchange station 40, the process provides for a step of transferring the cheese wheels from the first self-guided vehicle 36 to a second self-guided vehicle 41 configured to interface with the cheese wheel gripping machine 45 and move these cheese wheels up to the cheese wheel gripping machine 45 by means of the second self-guided vehicle 41.

At the cheese wheel gripping machine 45, the process provides for a step of collecting the cheese wheels from the second self-guided vehicle 41 by means of the cheese wheel gripping machine 45.

As already mentioned above, as an alternative to the self-guided vehicles 36, 41 the transfer from the accumulation station 30 or from the marking station 20 is carried out by means of one or more conveyor belts. Preferably, the step of automatically moving said cheese wheels from the accumulation station 30 or from the marking station 20 to the cheese wheel gripping machine 45 comprises placing the cheese wheels on the accumulation platform so as to free the movement means 35.

Preferably, in the step of automatically moving the cheese wheels from the accumulation station 30 to the cheese wheel gripping machine 45, each self-guided vehicle transports a plurality of cheese wheels for each trip. For example, each self-guided vehicle can carry a pallet which supports a plurality of cheese wheels.

Subsequently, the process provides for automatically positioning each cheese wheel on a seasoning shelf of a rack 50 by means of the cheese wheel gripping machine 45.

Preferably, this step is performed automatically as a function of the vacancies on the seasoning shelves and so as to obtain an orderly and organised distribution of the cheese wheels on the racks 50.

Preferably, the step of positioning each cheese wheel on a seasoning shelf comprises a step of reading the mark of said cheese wheel and a step of associating the mark (i.e. the unique code indicated by the same) with a positioning of the cheese wheel on the rack 50.

Such positioning can for example be on the basis of a disposition of preestablished places on the seasoning shelf, wherein each place is marked with a number indicating the rack, a number indicating the row and a number indicating the cheese wheel.

Preferably, these steps of moving the cheese wheel from the accumulation station 30 up to the cheese wheel gripping machine 45 and positioning each cheese wheel on a seasoning shelf are carried out mostly or entirely during days and/or times when the warehouse 1 is not manned, i.e. where there is no human labour assigned to work in the warehouse 1, for example at night. Advantageously, this feature allows using labour during business hours to preside over the marking station 20 and receiving station 10 and, during these hours, store the cheese wheels in the accumulation station 30. These cheese wheels are subsequently cleared out during unmanned periods of time in which they are automatically positioned on a rack 50 by the movement means 35 and by the cheese wheel gripping machine 45. Preferably, during the manned operating steps, therefore, the movement means 35 do not go to collect from the accumulation station 30 (where the cheese wheels continue to be stored to be subsequently used in the unmanned steps), but go directly to collect the delivered forms from the marking station 20 to bring them to the cheese wheel gripping machine 45. Preferably, the warehouse 1 comprises a control unit operatively connected to the marking device, the cheese wheel gripping machine 45, the movement means 35, and optionally to the first and second transfer means 15 and 25 and/or to the collection means 5.

The control unit is configured to associate each mark (i.e. the code it bears) with a position of the respective cheese wheel on the seasoning shelves and with a seasoning degree of the respective cheese wheel (i.e. the time it has spent in the seasoning room "S").

Preferably, the control unit is configured to build and/or regularly update a database containing information about the disposition of the cheese wheels on the racks 50 and the respective seasoning degree.

Furthermore, the control unit is configured to drive the cheese wheel gripping machine 45 so as to receive or collect and/or place the cheese wheels on the seasoning shelves as a function of the position of the cheese wheels already placed on the racks 50 and/or as a function of the environmental conditions of the seasoning room "S".

Preferably, the cheese wheel gripping machine 45 is configured to automatically scan the mark of the cheese wheels in the step of positioning on the racks 50 and send information to the control unit regarding the disposition of these cheese wheels so as to check and/or update the above-mentioned database.

Preferably, the control unit is configured to detect the position of the cheese wheel gripping machine 45 in the seasoning room "S" and to drive the movement means 35, and in particular the second self-guided vehicles 41, up to the cheese wheel gripping machine 45.

Preferably, the control unit is configured to drive the movement means 35 and the cheese wheel gripping machine 45 so as to move the cheese wheels from the accumulation station 30 to a rack 50 mostly or entirely during unmanned days and/or times of the warehouse 1, so as to achieve the advantages mentioned above in relation to the corresponding step of the process.

Preferably, during the manned steps, instead, the control unit is configured to drive the movement means 35 and the cheese wheel gripping machine 45 so as to move the cheese wheels from the marking station 20 to a rack 50.

Preferably, the control unit is configured to command the cheese wheel gripping machine 45 to move the cheese wheels being seasoned between the seasoning shelves of the racks 50 so as to compact the disposition of the same and to reduce the presence of empty spaces on the seasoning shelves.

Furthermore, the control unit can be configured to command the cheese wheel gripping machine 45 (or the plurality of cheese wheel gripping machines 45) to move the cheese wheels being seasoned between different positions in the seasoning room "S" so as to vary the seasoning conditions thereof.

Preferably, the control unit is configured to perform these movements of cheese wheels being seasoned during unmanned days and/or times of the warehouse 1.

Furthermore, the control unit is configured to perform these movements in conjunction with an automatic reading of the marks of each cheese wheel by the cheese wheel gripping machine 45 or another dedicated device and a consequent database update.

Preferably, the process and object of the present description comprises one or more steps of automatically moving the cheese wheels during their seasoning in order to compact their disposition on the shelves and/or change the environmental seasoning conditions, preferably by means of the cheese wheel gripping machine 45 driven by the control unit.

In particular, this step comprises the sub-steps of:
- automatically reading the mark of one or more cheese wheels positioned on a seasoning shelf;
- automatically moving these cheese wheels from a first position to a second position on the seasoning shelves as a function of predetermined criteria;
- associating the mark of the cheese wheel to a new positioning of the cheese wheel on the racks 50.

Preferably, the process comprises a further step of automatically calculating the seasoning degree of each cheese wheel and associating this seasoning degree to the mark of the respective cheese wheel.

Furthermore, preferably, the steps of automatically moving the cheese wheels during the seasoning are carried out as a function of the seasoning degree of each cheese wheel and/or the disposition of the same on the respective racks 50.

Preferably, the warehouse 1 comprises movable means for automatically cleaning between the racks 50 to clean the cheese wheels and/or the seasoning shelves on which they lie and periodically turn around the cheese wheels being seasoned.

Preferably, the cleaning means comprise one or more reading devices of the marks of the cheese wheels

Preferably, the cleaning means are connected to the control unit and are configured to send thereto data regarding the positioning of each cheese wheel and the control unit is configured to update the aforementioned database on the basis of these signals.

Preferably, the control unit is also configured to command the cleaning means so as to avoid conflicts with the cheese wheel gripping machine 45, preferably in the days and/or times when there is no human work activity, for example at night.

Preferably, the process and object of the present description comprises a step of cleaning and automatically and regularly turning around each cheese wheel during the seasoning and, preferably, a concomitant step of checking the mark of this cheese wheel in order to verify and/or update the association between each mark and the respective position.

Preferably, these steps of cleaning, turning around and checking the mark are carried out mostly or entirely during unmanned days and/or times of the warehouse 1.

Preferably, the warehouse 1 comprises an outlet station 70 configured for the reception and storage of seasoned cheese wheels coming from the seasoning room "S" and similar to the accumulation station 30 described above.

Preferably, the movement means 35 are also similar to the automatic movement of the seasoned cheese wheels from the cheese wheel gripping machine 45 to the outlet station 70.

Furthermore, the control unit is configured to command the cheese wheel gripping machine 45 and the movement means 35 so as to automatically move the cheese wheels from the respective rack 50 to the outlet station 70 as a function of the seasoning degree reached by each cheese wheel and a seasoning degree envisaged for the same.

Preferably, the control unit is configured to control these movements from the respective rack 50 to the outlet station mainly during the days and/or times when the warehouse 1 is not manned.

This advantageously allows storing the outgoing cheese wheels in the outlet station 70, exploiting labour in the times in which it is available for further processing (for example wrapping) of these cheese wheels and arranging for the shipment of the same, so as to empty the outlet station 70. Preferably, the warehouse 1 comprises means for reading the mark at the outlet station 70 and the control unit is configured to check the mark of the outgoing cheese wheels by these reading means so as to verify the identity and/or the seasoning degree of the outgoing cheese wheels.

Preferably, the process and object of the present description comprises a step of calculating the seasoning degree of each cheese wheel and checking that the seasoning degree is greater than a seasoning objective associated with the same cheese wheel (i.e. with its marking code). Moreover, if this check has a positive result, the process comprises a step of automatically moving the cheese wheel up to the outlet station 70, in particular by means of the cheese wheel gripping machine 45 and the movement means 35.

Preferably, this step is performed largely or entirely during unmanned days and/or times of the warehouse 1, so as to obtain the advantages described above.

Preferably, the process comprises a further step of controlling the mark of the outgoing cheese wheels to verify the identity the and/or the seasoning degree thereof.

Furthermore, the process provides for the subsequent steps of weighing, matching advertising materials, marking the seasoned cheese wheels, palletising and filming them, preferably carried out automatically through suitable machinery and means for moving the cheese wheels.

Both the warehouse and its management process have been described with reference to hard cheese wheels, however they are also usable for seasoning semi-hard or soft cheese wheels.

The present invention reaches the proposed object, overcoming the described disadvantages of the prior art.

Advantageously, the level of automation of the stations, of the cheese wheel gripping machine, of the cleaning means and of the self-guided vehicles described and the coordination guaranteed by the control unit and the process described determines a more efficient management with respect to the existing warehouses.

At the same time, the environmental seasoning conditions in racks are maintained, substantially adhering to those of the traditional warehouses.

Furthermore, the warehouse and the process described above allow human intervention at all steps of the movement and seasoning of the cheese wheels, guaranteeing access to the operators if the machines malfunction and for the inspection of the cheese wheels.

In particular, the operators can autonomously intervene and manually move the cheese wheels on the racks and, thanks to the mark of the cheese wheels and the redundancy in controlling the same, the control unit can see to automatically updating the database without the slightest risk of errors on the duration of the seasoning.

Moreover, the management of the cheese wheels through a mark allows keeping track of the individual cheese wheels entering the seasoning room and automatically and individually supervising the seasoning process, ensuring the seasoning characteristics of the outgoing cheese wheels. Finally, the warehouse and the process described can be implemented in a traditional seasoning warehouse without departing from the scope of the appended claims.

## Claims

1. A warehouse (1) for seasoning hard cheese wheels comprising:
- a marking station (20) comprising a marking device configured to impress a long-lasting, unique and machine-readable mark on respective hard cheese wheels;
- an accumulation station (30) configured for a provisional storage of said cheese wheels, wherein said accumulation station (30) comprises a fixed structure with housing stations for said cheese wheels and/or at least one conveyor belt, said accumulation station (30) acting as a buffer for the subsequent machinery;
- a plurality of racks (50) comprising respective seasoning shelves for said cheese wheels;
- a cheese wheel gripping machine (45) movable between said racks (50) to automatically position one or more of said cheese wheels on said seasoning shelves;
- movement means (35) to automatically move one or more of said cheese wheels between said accumulation station (30) or said marking station (20) and said cheese wheel gripping machine (45), said cheese wheel gripping machine (45) automatically collecting or receiving the cheese wheels from said movement means (35).

2. The warehouse (1) according to claim 1, wherein said movement means (35) comprise one or more self-guided vehicles (36, 41) for collecting said cheese wheels from the accumulation station (30) or from the marking station (20) and/or to deliver said cheese wheels to the cheese wheel gripping machine (45).

3. The warehouse (1) according to any of the preceding claims, wherein said movement means (35) comprise one or more conveyor belts arranged between said accumulation station (30) or said marking station (20) and said racks (50).

4. The warehouse (1) according to any of the preceding claims, comprising an accumulation platform for said cheese wheels, said cheese wheel gripping machine (45) moving said cheese wheels from said movement means (35) to the accumulation platform.

5. The warehouse (1) according to any of the preceding claims, wherein said self-guided vehicles comprise at least a first self-guided vehicle (36) to collect one or more cheese wheels from the accumulation station (30) or from the marking station (20) and at least a second self-guided vehicle (41) to deliver one or more cheese wheels to the cheese wheel gripping machine (45), said warehouse (1) comprises at least an exchange station (40) in which a second self-guided vehicle (41) receives one or more cheese wheels from a first self-guided vehicle (36).

6. The warehouse (1) according to one or more of the preceding claims, comprising a receiving station (10) for a temporary storage of cheese wheels entering the warehouse (1) and transfer means (15, 25) to automatically transfer said cheese wheels from said receiving station (10) to said marking station (20) and/or to automatically transfer said cheese wheels from said marking station (20) to said accumulation station (30).

7. The warehouse (1) according to one or more of the preceding claims,
comprising a control unit operatively connected to said cheese wheel gripping machine (45) and to said movement means (35),
said control unit being configured to associate each mark to a position of the respective cheese wheel on said seasoning shelves and to a seasoning degree of said respective cheese wheel; and
said control unit commanding movements of said movement means (35) and/or said cheese wheel gripping machine (45) according to the position and/or the seasoning degree of the cheese wheels on said seasoning shelves.

8. The warehouse (1) according to claim 7, comprising cleaning means of the cheese wheels and/or of said seasoning shelves, said cleaning means being automatically movable between said racks (50) and operatively connected to said control unit, said cleaning means comprising one or more reading devices of the marks of the cheese wheels.

9. The warehouse (1) according to one or more of the preceding claims, wherein said racks (50) are arranged in parallel rows having a reciprocal distance comprised between 120 cm and 180 cm, preferably between 140 cm and 160 cm.

10. The warehouse (1) according to any one of the preceding claims, wherein said racks (50) are located in a seasoning room (S) of the cheeses, said accumulation station (30) being arranged externally of said seasoning room (S).

11. A process for the management of a warehouse (1) provided with racks (50) for seasoning hard cheese wheels, comprising the steps of:
- arranging a plurality of hard cheese wheels;
- impressing a long-lasting, unique and machine-readable mark on respective hard cheese wheels;
- provisionally storing said cheese wheels in an accumulation station (30) or buffer;
- automatically moving said cheese wheels from the accumulation station (30) or from the marking station (20) to a cheese wheel gripping machine (45);
- automatically positioning each cheese wheel on a seasoning shelf of a rack (50) by means of said cheese wheel gripping machine (45).

12. The process according to claim 11, wherein said step of positioning each cheese wheel on a seasoning shelf comprises a step of reading the mark of said cheese wheel and a step of associating said mark to a positioning of said cheese wheel on the rack (50).

13. The process according to claim 11 or 12, wherein said step of automatically moving said cheese wheels from the accumulation station (30) or from the marking station (20) to the cheese wheel gripping machine (45) comprises positioning said cheese wheels on said accumulation platform.

14. The process according to one or more of claims from 11 to 13, wherein the step of automatically moving the cheese wheels comprises:
- collecting one or more cheese wheels from the accumulation station (30) or from the marking station (20) by means of a first self-guided vehicle (36) configured to interface with said accumulation station (30) or with said marking station (20);
- transferring said one or more cheese wheels from the first self-guided vehicle (36) to a second self-guided vehicle (41) configured to interface with said cheese wheel gripping machine (45), and
- transferring said one or more cheese wheels from the second self-guided vehicle (41) to said cheese wheel gripping machine (45).

15. The process according to one or more of claims from 11 to 14, wherein the step of arranging a plurality of hard cheese wheels comprises a step of automatically moving said cheese wheels from a road vehicle to a receiving station (10) in which the cheese wheels are temporarily stored, said process comprising a subsequent step of automatically transferring said plurality of cheese wheels from the receiving station (10) to a marking station (20) in which said step of impressing the mark takes place.

16. The process according to one or more of claims from 11 to 15, comprising a step of moving the cheese wheels during seasoning, comprising sub-steps of:
- automatically reading the mark of one or more cheese wheels positioned on a seasoning shelf;
- automatically moving one or more of the cheese wheels from a first position to a second position on said seasoning shelves;
- associating the mark of the cheese wheel to a new positioning of said cheese wheel on one of said racks (50).

17. The process according to one or more of claims from 11 to 16,
comprising a step of automatically calculating the seasoning degree of each cheese wheel and associating said seasoning degree to the mark of said cheese wheel;
and a step of checking if said seasoning degree is greater than a seasoning target associated to said mark and, if said step of controlling return a positive outcome, automatically moving said cheese wheel to an outlet station (70) in which outgoing cheese wheels are accumulated.

## Patentansprüche

1. Ein Lagerhaus (1) zum Reifen von Hartkäselaiben, umfassend:
- eine Markierungsstation (20), die eine Markierungsvorrichtung umfasst, die ausgebildet ist, eine lang anhaltende, eindeutige und maschinenlesbare Markierung auf entsprechende Hartkäseräder einzuprägen;
- eine Sammelstation (30), die für eine vorläufige Lagerung der Käselaibe ausgebildet ist, wobei die Sammelstation (30) eine feste Struktur mit Aufnahmestationen für die Käselaibe und/oder mindestens ein Förderband umfasst, wobei die Sammelstation (30) als ein Puffer für die nachfolgenden Apparate dient;
- eine Vielzahl von Regalen (50), die entsprechende Reifungsböden für die Käselaibe umfassen;
- eine Käselaib-Greifmaschine (45), die zwischen den Regalen (50) beweglich ist, um automatisch einen oder mehrere der Käselaibe auf den Reifungsböden zu positionieren;
- Bewegungsmittel (35) zum automatischen Bewegen eines oder mehrerer der Käselaibe zwischen der Sammelstation (30) oder der Markierungsstation (20) und der Käselaib-Greifmaschine (45), wobei die Käselaib-Greifmaschine (45) die Käselaibe automatisch von den Bewegungsmitteln (35) aufnimmt oder empfängt.

2. Das Lagerhaus (1) nach Anspruch 1, wobei die Bewegungsmittel (35) eines oder mehrere selbstgeführte Fahrzeuge (36, 41) zum Abholen der Käselaibe von der Sammelstation (30) oder von der Markierungsstation (20) und/oder zum Liefern der Käselaibe an die Käselaib-Greifmaschine (45) umfassen.

3. Das Lagerhaus (1) nach einem der vorhergehenden Ansprüche, wobei die Bewegungsmittel (35) eines oder mehrere Förderbänder umfassen, die zwischen der Sammelstation (30) oder der Markierungsstation (20) und den Regalen (50) angeordnet sind.

4. Das Lagerhaus (1) nach einem der vorhergehenden Ansprüche, umfassend eine Sammelplattform für die Käselaibe umfasst, wobei die Käselaib-Greifmaschine (45) die Käselaibe von den Bewegungsmitteln (35) zu der Sammelplattform bewegt.

5. Das Lagerhaus (1) nach einem der vorhergehenden Ansprüche, wobei die selbstgeführten Fahrzeuge mindestens ein erstes selbstgeführtes Fahrzeug (36) umfassen, um einen oder mehrere Käselaibe von der Sammelstation (30) oder von der Markierungsstation (20) abzuholen, und mindestens ein zweites selbstgeführtes Fahrzeug (41), um einen oder mehrere Käselaibe an die Käselaib-Greifmaschine (45) zu liefern, wobei das Lagerhaus (1) mindestens eine Austauschstation (40) umfasst, in der ein zweites selbstgeführtes Fahrzeug (41) einen oder mehrere Käselaibe von einem ersten selbstgeführten Fahrzeug (36) erhält.

6. Das Lagerhaus (1) nach einem oder mehreren der vorhergehenden Ansprüche, umfassend eine Aufnahmestation (10) für eine vorübergehende Lagerung von Käselaiben, die in das Lagerhaus (1) eintreten, und Überführungsmittel (15, 25) zum automatischen Überführen der Käselaibe von der Aufnahmestation (10) zu der Markierungsstation (20) und/oder zum automatischen Überführen der Käselaibe von der Markierungsstation (20) zu der Sammelstation (30).

7. Das Lagerhaus (1) nach einem oder mehreren der vorhergehenden Ansprüche, umfassend eine Steuereinheit, die mit der Käselaib-Greifmaschine (45) und den Bewegungsmitteln (35) in Wirkverbindung steht,
wobei die Steuereinheit ausgebildet ist, jede Markierung mit einer Position des jeweiligen Käselaibs auf den Reifungsböden und mit einem Reifegrad des jeweiligen Käselaibs zu verknüpfen; und
wobei die Steuereinheit Bewegungen der Bewegungsmittel (35) und/oder der Käselaib-Greifmaschine (45) entsprechend der Position und/oder dem Reifegrad der Käselaibe auf den Reifungsböden befiehlt.

8. Das Lagerhaus (1) nach Anspruch 7, umfassend Reinigungsmittel für die Käselaibe und/oder die Reifungsböden, wobei die Reinigungsmittel zwischen den Regalen (50) automatisch bewegbar sind und mit der Steuereinheit in einer Wirkverbindung stehen, wobei die Reinigungsmittel eine oder mehrere Lesevorrichtungen für die Markierungen der Käselaibe umfassen.

9. Das Lagerhaus (1) nach einem oder mehreren der vorhergehenden Ansprüche, wobei die Regale (50) in parallelen Reihen mit einem gegenseitigen Abstand zwischen 120 cm und 180 cm, vorzugsweise zwischen 140 cm und 160 cm, angeordnet sind.

10. Das Lagerhaus (1) nach einem der vorhergehenden Ansprüche, wobei die Regale (50) in einem Reifungsraum (S) für den Käse angeordnet sind und die Sammelstation (30) außerhalb des Reifungsraums (S) angeordnet ist.

11. Verfahren zur Verwaltung eines Lagers (1), das mit Regalen (50) zum Reifen von Hartkäselaiben versehen ist, umfassend die Schritte:
- Anordnen einer Vielzahl von Hartkäselaiben;
- Einprägen einer lang anhaltenden, einzigartigen und maschinenlesbaren Markierung auf die jeweiligen Hartkäselaibe;
- vorübergehendes Lagern der Käselaibe in einer Sammelstation (30) oder einem Puffer;
- automatisches Bewegen der Käselaibe von der Sammelstation (30) oder von der Markierungsstation (20) zu einer Käselaib-Greifmaschine (45);
- automatisches Positionieren jedes Käselaibs auf einem Reifungsboden eines Regals (50) mit Hilfe der Käselaib-Greifmaschine (45).

12. Verfahren nach Anspruch 11, wobei der Schritt des Positionierens jedes Käselaibs auf einem Reifungsboden einen Schritt des Lesens der Markierung des Käselaibs und einen Schritt des Zuordnens der Markierung zu einer Positionierung des Käselaibs auf dem Regal (50) umfasst.

13. Verfahren nach Anspruch 11 oder 12, wobei der Schritt des automatischen Bewegens der Käselaibe von der Sammelstation (30) oder von der Markierungsstation (20) zu der Käselaib-Greifmaschine (45) das Positionieren der Käselaibe auf der Sammelplattform umfasst.

14. Verfahren nach einem oder mehreren der Ansprüche 11 bis 13, wobei der Schritt des automatischen Bewegens der Käselaibe umfasst:
- Aufnehmen eines oder mehrerer Käselaibe von der Sammelstation (30) oder von der Markierungsstation (20) mittels eines ersten selbstgeführten Fahrzeugs (36), das ausgebildet ist, eine Schnittstelle mit der Sammelstation (30) oder mit der Markierungsstation (20) zu bilden;
- Überführen des einen oder der mehreren Käselaibe von dem ersten selbstgeführten Fahrzeug (36) zu einem zweiten selbstgeführten Fahrzeug (41), das ausgebildet ist, eine Schnittstelle mit der Käselaib-Greifmaschine (45) zu bilden, und
- Überführen des einen oder der mehreren Käselaibe von dem zweiten selbstgeführten Fahrzeug (41) zu der Käselaib-Greifmaschine (45).

15. Verfahren nach einem oder mehreren der Ansprüche 11 bis 14, wobei der Schritt des Anordnens einer Vielzahl von Hartkäselaiben einen Schritt des automatischen Bewegens der Käselaibe von einem Straßenfahrzeug zu einer Aufnahmestation (10) umfasst, in der die Käselaibe vorübergehend gelagert werden, wobei das Verfahren einen nachfolgenden Schritt des automatischen Überführens der Vielzahl von Käselaiben von der Aufnahmestation (10) zu einer Markierungsstation (20) umfasst, in der der Schritt des Einprägens der Markierung stattfindet.

16. Verfahren nach einem oder mehreren der Ansprüche 11 bis 15, umfassend einen Schritt des Bewegens der Käselaibe während des Reifens, umfassend die folgenden Unterschritte:
- automatisches Lesen der Markierung von einem oder mehreren Käselaiben, die auf einem Reifungsboden positioniert sind;
- automatisches Bewegen eines oder mehrerer der Käselaibe von einer ersten Position zu einer zweiten Position auf den Reifungsböden;
- Zuordnen der Markierung des Käselaibs zu einer neuen Positionierung des Käselaibs auf einem der Regale (50).

17. Verfahren nach einem oder mehreren der Ansprüche 11 bis 16, umfassend einen Schritt der automatischen Berechnung des Reifegrads jedes Käselaibs und der Zuordnung des Reifegrads zu der Markierung des Käselaibs;
und einen Schritt des Überprüfens, ob der Reifegrad größer ist als ein Reifeziel, das der Markierung zugeordnet ist, und, wenn der Schritt des Überprüfens ein positives Ergebnis liefert, des automatischen Bewegens des Käselaibs zu einer Ausgabestation (70), in der ausgehende Käselaibe gesammelt werden.

## Revendications

1. Un entrepôt (1) pour la maturation des meules de fromage à pâte dure comprenant :
- une station de marquage (20) comprenant un dispositif de marquage configuré pour imprimer une marque durable, unique et lisible par machine sur des meules de fromage à pâte dure respectives ;
- une station d'accumulation (30) configurée pour un stockage provisoire desdites meules de fromage, ladite station d'accumulation (30) comprenant une structure fixe avec des stations de logement pour lesdites meules de fromage et/ou au moins une bande transporteuse, ladite station d'accumulation (30) agissant comme zone tampon pour les machines suivantes ;
- une pluralité de rayonnages (50) comprenant des étagères de maturation respectives pour lesdites meules de fromage ;
- une machine (45) de préhension de meules de fromage, mobile entre lesdits rayonnages (50) pour positionner automatiquement une ou plusieurs desdites meules de fromage sur lesdites étagères de maturation ;
- des moyens de déplacement (35) pour déplacer automatiquement une ou plusieurs desdites meules de fromage entre ladite station d'accumulation (30) ou ladite station de marquage (20) et ladite machine (45) de préhension de meules de fromage, ladite machine (45) de préhension de meules de fromage collectant automatiquement ou recevant les meules de fromage en provenance desdits moyens de déplacement (35).

2. L'entrepôt (1) selon la revendication 1, dans lequel lesdits moyens de déplacement (35) comprennent un ou plusieurs véhicules autoguidés (36, 41) pour collecter lesdites meules de fromage provenant de la station d'accumulation (30) ou provenant de la station de marquage (20) et/ou pour délivrer lesdites meules à la machine (45) de préhension de meules de fromage.

3. L'entrepôt (1) selon l'une quelconque des revendications précédentes, dans lequel lesdits moyens de déplacement (35) comprennent une ou plusieurs bandes transporteuses agencées entre ladite station d'accumulation (30) ou ladite station de marquage (20) et lesdits rayonnages (50).

4. L'entrepôt (1) selon l'une quelconque des revendications précédentes, comprenant une plate-forme d'accumulation pour lesdites meules de fromage, ladite machine (45) de préhension de meules de fromage déplaçant lesdites meules de fromage depuis lesdits moyens de déplacement (35) vers la plate-forme d'accumulation.

5. L'entrepôt (1) selon l'une quelconque des revendications précédentes, dans lequel lesdits véhicules autoguidés comprennent au moins un premier véhicule autoguidé (36) pour collecter une ou plusieurs meules de fromage depuis la station d'accumulation (30) ou depuis la station de marquage (20) et au moins un deuxième véhicule autoguidé (41) pour délivrer une ou plusieurs meules de fromage à la machine (45) de préhension de meules de fromage, ledit entrepôt (1) comprend au moins une station d'échange (40) dans laquelle un deuxième véhicule autoguidé (41) reçoit une ou plusieurs meules de fromage d'un premier véhicule autoguidé (36).

6. L'entrepôt (1) selon une ou plusieurs des revendications précédentes, comprenant une station de réception (10) pour un stockage temporaire de meules de fromage entrant dans l'entrepôt (1) et des moyens de transfert (15, 25) pour transférer automatiquement lesdites meules de fromage depuis ladite station de réception (10) vers ladite station de marquage (20) et/ou pour transférer automatiquement lesdites meules de fromage depuis ladite station de marquage (20) vers ladite station d'accumulation (30).

7. L'entrepôt (1) selon une ou plusieurs des revendications précédentes, comprenant une unité de commande reliée fonctionnellement à ladite machine (45) de préhension de meules de fromage et auxdits moyens de déplacement (35),
ladite unité de commande étant configurée pour associer chaque marque à une position de la meule à fromage respective sur lesdites étagères de maturation et à un degré de maturation de ladite meule à fromage respective ; et
ladite unité de commande commandant des mouvements desdits moyens de déplacement (35) et/ou de ladite machine (45) de préhension de meules de fromage en fonction de la position et/ou du degré de maturation des meules de fromage sur lesdites étagères de maturation.

8. L'entrepôt (1) selon la revendication 7, comprenant des moyens de nettoyage des meules et/ou desdites étagères de maturation, lesdits moyens de nettoyage étant automatiquement mobiles entre lesdits rayonnages (50) et connectés fonctionnellement à ladite unité de commande, lesdits moyens de nettoyage comprenant un ou plusieurs dispositifs de lecture des marques des meules de fromage.

9. L'entrepôt (1) selon une ou plusieurs des revendications précédentes, dans lequel lesdits rayonnages (50) sont disposés en rangées parallèles ayant une distance réciproque comprise entre 120 cm et 180 cm, de préférence entre 140 cm et 160 cm.

10. L'entrepôt (1) selon l'une quelconque des revendications précédentes, dans lequel lesdits rayonnages (50) sont situés dans une salle de maturation (S) des fromages, ladite station d'accumulation (30) étant agencée à l'extérieur de ladite salle de maturation (S).

11. Un procédé de gestion d'un entrepôt (1) pourvu de rayonnages (50) pour la maturation de meules de fromage à pâte dure, comprenant les étapes consistant à :
- disposer une pluralité de meules à pâte dure ;
- imprimer une marque durable, unique et lisible par machine sur les meules de fromage à pâte dure respectives ;
- stocker provisoirement lesdites meules de fromage dans une station d'accumulation (30) ou zone tampon ;
- déplacer automatiquement lesdites meules de fromage depuis la station d'accumulation (30) ou depuis la station de marquage (20) vers une machine (45) de préhension de meules de fromage ;
- positionner automatiquement chaque meule de fromage sur une étagère de maturation d'un rayonnage (50) au moyen de ladite machine (45) de préhension de meules de fromage.

12. Le procédé selon la revendication 11, dans lequel ladite étape de positionnement de chaque meule sur une étagère de maturation comprend une étape de lecture du repère de ladite meule de fromage et une étape d'association de ladite marque à un positionnement de ladite meule de fromage sur le rayonnage (50).

13. Le procédé selon la revendication 11 ou la revendication 12, dans lequel ladite étape de déplacement automatique desdites meules de fromage depuis la station d'accumulation (30) ou depuis la station de marquage (20) vers la machine (45) de préhension de meules de fromage comprend le fait de positionner lesdites meules de fromage sur ladite plate-forme d'accumulation.

14. Le procédé selon une ou plusieurs des revendications 11 à 13, dans lequel l'étape de déplacement automatique des meules de fromage comprend :
- le fait de collecter une ou plusieurs meules de fromage depuis la station d'accumulation (30) ou depuis la station de marquage (20) au moyen d'un premier véhicule autoguidé (36) configuré pour s'interfacer avec ladite station d'accumulation (30) ou avec ladite station de marquage (20) ;
- le fait de transférer lesdites une ou plusieurs meules de fromage depuis le premier véhicule autoguidé (36) vers un deuxième véhicule autoguidé (41) configuré pour s'interfacer avec ladite machine (45) de préhension de meules de fromage, et
- le fait de transférer lesdites une ou plusieurs meules de fromage depuis le deuxième véhicule autoguidé (41) vers ladite machine (45) de préhension de meules de fromage.

15. Le procédé selon une ou plusieurs des revendications 11 à 14, dans lequel l'étape d'agencement d'une pluralité de meules de fromage à pâte dure comprend une étape consistant à déplacer automatiquement lesdites meules de fromage d'un véhicule routier à une station de réception (10) dans laquelle les meules de fromage sont stockées temporairement, ledit procédé comprenant une étape ultérieure consistant à transférer automatiquement ladite pluralité de meules de fromage depuis la station de réception (10) à une station de marquage (20) dans laquelle a lieu ladite étape d'impression de la marque.

16. Le procédé selon une ou plusieurs des revendications 11 à 15, comprenant une étape consistant à déplacer les meules de fromage pendant la maturation, comprenant des sous-étapes consistant à :
- lire automatiquement la marque d'une ou plusieurs meules de fromage positionnées sur une étagère de maturation ;
- déplacer automatiquement une ou plusieurs des meules de fromage depuis une première position à une deuxième position sur lesdites étagères de maturation ;
- associer le repère de la meule de fromage à un nouveau positionnement de ladite meule de fromage sur l'un desdits rayonnages (50).

17. Le procédé selon une ou plusieurs des revendications 11 à 16, comprenant une étape consistant à calculer automatiquement le degré de maturation de chaque meule de fromage et à associer ledit degré de maturation au repère de ladite meule de fromage ;
et une étape consistant à vérifier si ledit degré de maturation est supérieur à une cible de maturation associée à ladite marque et, si ladite étape de contrôle renvoie un résultat positif, à déplacer automatiquement ladite meule vers une station de sortie (70) dans laquelle les meules de fromage sortantes sont accumulées.
